# EUROPEAN PATENT APPLICATION

(11) **EP 4 113 405 A1**
(43) Date of publication of application: **04.01.2023**
(21) Application number: 22178267.5
(22) Date of filing: 10.06.2022
(51) Int. Cl.: G06Q 10/06, G06Q 10/00

(54) **CUSTOMIZED INSTRUCTIONAL FLOWCHART GENERATION AND MODIFICATION SYSTEM**

(30) Priority: 02.07.2021 US 202117366321
(71) Applicant: Transportation IP Holdings, LLC, Norwalk, CT 06851 (US)
(72) Inventor: Scholz, Bernhard Joseph, Norwalk, 06851 (US); Roddy, Nicholas, Norwalk, 06851 (US); Kacyon, Jeffry, Norwalk, 06851 (US); Anandhan, Amuthan, Norwalk, 06851 (US); Lahut, John, Norwalk, 06851 (US); Shaikh, Hammad, Norwalk, 06851 (US); Quigley, Jason, Norwalk, 06851 (US)
(74) Representative: Laufhütte, Dieter

(57) **Abstract**

Systems and methods for tailoring a single prescription for different users for completing tasks on equipment are provided. A prescription representative of a flowchart or decision tree for performing a main set of the tasks is obtained. Characteristics of the equipment and/or a user of the prescription are obtained. Content of the prescription that is displayed to the user during performance of at least some of the tasks on the equipment is tailored based on the characteristics. The content of the prescription is tailored by hiding one or more of the tasks that are not applicable to the equipment from display to the user. This can occur without any data or information being removed from or added to the prescription. Instead, the prescription can be tailored by changing what information is automatically and/or initially displayed to the user.

## Description

### BACKGROUND

### Technical Field.

The subject matter described herein relates to systems and methods that generate and communicate instructional flowcharts for performing tasks on objects (e.g., equipment).

### Discussion of Art.

Instructions for remediating or diagnosing issues with equipment may be called "prescriptions" or "Rxs." Some of these known instructions are crafted as a list of tasks to be performed in a sequence. The prescriptions may be electronically communicated to maintenance technicians and craftspersons as a list of tasks to perform on equipment. The prescriptions can be delivered electronically (e.g., e-mail) and printed out when used, or as a list of tasks that can be displayed in an on-line portal.

Oftentimes when a technician or craftsperson is working a prescription, he or she may need to stop for one reason or another and resume at a later time. Sometimes a technician or craftsperson working a prescription might not be able to finish before the end of his or her shift, and will need to pass on where he or she left off to the next technician or craftsperson taking over on the next shift.

With a prescription is laid out as a list of sequential tasks, it can be straightforward to see how far a technician or craftsperson has progressed in working the prescription tasks. But if the tasks in the prescription are not worked (e.g., performed) in a sequential order, then determining where a technician or craftsperson left off might not be straightforward or clear. This can be especially true for flowchart prescriptions, which might not follow a linear path to completion. The person taking over a partially completed prescription may not know or be able to determine what tasks were completed, what the order of task completion is (e.g., what path through the flowchart was taken), etc. Additionally, it can be difficult for the personnel to add notes or annotations on the completed tasks when the prescription is digitally provided.

The prescriptions also may include detailed instructions for performing the tasks outlined in the prescriptions. The personnel performing the tasks may have a variety of different amounts of experience, training, education, or the like. Some more experienced and/or educated personnel may not need as many details on how to complete some tasks as less experienced or educated personnel. For example, expert technicians and craftspersons want to work a prescription at a high level. These personnel usually are familiar with the prescription or targeted failure modes of the prescription, and do not need a lot of additional details to complete the tasks in the prescription. These personnel may only require simple or minimal instructions, if at all, as they know how to address the issue at hand and may not want the structure and content of the prescription to get in their way and slow them down.

Novice technicians and craftspersons (or at least those unfamiliar with the prescription or its targeted failure modes), on the other hand, may want to have more information available. These personnel may want to have more guidance as they work on an issue or on equipment that might not be that familiar. These personnel may want a more detailed set of instructions for working the prescription, with additional documentation available if needed. But creating multiple versions of complex prescriptions with each version tailored to a different experience and/or education level of different technicians and craftspersons is too timely, labor intensive, and costly approach for many prescriptions.

### BRIEF DESCRIPTION

In one embodiment, a method (e.g., for tailoring or customizing a single prescription for presentation to different users for completing tasks on equipment) is provided. The method includes obtaining the prescription that is representative of a flowchart or decision tree for performing a main set of the tasks on the equipment. One or more of the tasks including a subset of subtasks. The method also includes determining a personnel characteristic of person(s) that will perform the tasks on the equipment, an equipment identification, an equipment configuration, a first history of usage and/or prior tasks performed on the equipment, a second history of usage and/or prior tasks performed on other equipment that is the same model as the equipment, and/or sensor data of the equipment. The method also includes configuring the prescription based on the personnel characteristic, the equipment identification, the equipment configuration, the first history, the second history, and/or the sensor data. The set of instructions is configured by revealing at least a first subset of the subtasks and/or concealing at least a second subset of the subtasks. The method also includes communicating the prescription that has been configured to the one or more persons for performing the tasks in the prescription on the equipment.

A system (e.g., for tailoring or customizing a single prescription for presentation to different users for completing tasks on equipment) also is provided. The system includes a controller (e.g., a user controller and/or a system controller) that is configured to obtain a prescription representative of a flowchart or decision tree for performing a main set of tasks on equipment. One or more of the tasks includes a subset of subtasks. The controller is configured to determine one or more of a location of the equipment, a personnel characteristic of one or more persons that will perform the tasks on the equipment, an equipment identification, an equipment configuration, a first history of usage and/or prior tasks performed on the equipment, a second history of usage and/or prior tasks performed on other equipment that is the same model as the equipment, and/or sensor data of the equipment. The controller also is configured to direct an input and output device to display the prescription based on the one or more of the location, the personnel characteristic, the equipment identification, the equipment configuration, the first history, the second history, and/or the sensor data. The set of instructions is configured by one or more of revealing at least a first subset of the subtasks, and/or concealing at least a second subset of the subtasks.

Another method (e.g., for tailoring or customizing a single prescription for presentation to different users for completing tasks on equipment) also is provided. This method includes obtaining a prescription representative of a flowchart or decision tree for performing a main set of tasks on equipment, determining one or more characteristics of the equipment or a user of the prescription, and tailoring (e.g., customizing) content of the prescription that is displayed to the user during performance of at least some of the tasks on the equipment based on the one or more characteristics. The content of the prescription is tailored by hiding one or more of the tasks that are not applicable to the equipment from display to the user. This can occur without any data or information being removed from or added to the prescription. Stated differently, the content of the prescription can be tailored without changing the information included in the prescription. Instead, the prescription can be tailored by changing what information is automatically and/or initially displayed to the user. The method also includes communicating the prescription that has been tailored to the user for performing the tasks in the prescription on the equipment.

### BRIEF DESCRIPTION OF THE DRAWINGS

The inventive subject matter may be understood from reading the following description of non-limiting embodiments, with reference to the attached drawings, wherein below:
Figure 1 illustrates one embodiment of a customized instructional flowchart generation and modification system;
Figures 2A and 2B illustrate one example of a graphical user interface (GUI) that can be presented on the user I/O device for viewing, expanding or contracting, editing, or annotating one or more of the prescriptions;
Figure 3 illustrates another example of the prescription shown in Figures 2A and 2B with a node being expanded;
Figure 4 illustrates another example of the portion of the GUI shown in Figure 3;
Figure 5 illustrates another example of a portion of the GUI shown in Figures 2A and 2B; and
Figure 6 illustrates a flowchart of one embodiment of a method for creating, presenting, and/or using a prescription to perform operations on equipment.

### DETAILED DESCRIPTION

Embodiments of the subject matter described herein relate to systems and methods that customize, generate, and/or modify instructional flowcharts or process maps. These systems and methods can be used to generate the flowcharts and communicate the flowcharts to personnel for completing the tasks in the flowcharts. The personnel may be humans that are performing tasks of the flowcharts, but optionally can include automated equipment (such as robots) that perform the tasks in the flowcharts. At least one technical effect of the subject matter described herein is the diagnosis or repair of equipment using the flowcharts that are generated and/or customized by the systems and methods. For example, at least one technical effect can involve changing a state of equipment (e.g., an engine, brake, turbine, electrical system, etc.) from a non-functional state (or a state where the equipment is operating but with reduced functionality) to a functional state (or an improved state where the equipment is operating with increased functionality).

As one example, the systems and methods can create prescriptions containing flowcharts and/or decision trees that include information targeted at experts and novices alike within the same prescription. The prescription can be displayed by the systems and methods to allow both experts and novices to view and work the same prescription. The expert technician/craftsperson can see tasks with instructions written at a high level, and novices have the ability to choose to see more information, for example view tasks written targeting a lower level of understanding. Only a single version of the prescription may be created and maintained, thereby reducing or avoiding the labor, cost, and time involved with creating different prescriptions for different experience and/or education levels. Within the prescription, only a single set of tasks may be created. Tasks within the prescription can have both simple and detailed task content. The personnel can chose to view the simplified content, but also view the detailed content if needed. Additional documentation (e.g., images, text, videos, etc.) can be attached to the task by the systems and methods. The personnel can select to review or not review the additional documentation based on their individual need for additional information.

The systems and methods can create the prescriptions by defining a set of subtasks for a complicated task. The subtasks can be organized as smaller flowcharts or decision trees nested within a larger flowchart or decision tree of the overall prescription. This subtask flow can be used to break the task down into more detail. The start and end of the subtask flow can be marked with explicit "start" and "end" subtask nodes to clearly define where to start working the subtasks and where the end of the subtask flow is. Each subtask can provide more information to novice or less experienced users, or to experienced users who request additional information, detail, or depth.

At display time the subtask flow for a task can be hidden until requested by the user. Within the view of the flowchart or decision tree, the high-level task can be clicked on to expand the task and show the subtasks of the higher-level task (arranged as a decision tree). In one embodiment, the subtasks within the higher-level task are not visible unless or until the node representing the higher-level task is selected (e.g., by a user selecting the node using the user I/O device(s)). Once expanded, the subtask view can be collapsed again to hide the subtasks and show just the higher-level task. When the higher-level task is expanded and the subtasks are shown, the personnel can be automatically taken to the node in the subtask flow marked as the start. At the subtask level, technicians and craftspersons can work the subtasks no different from working the tasks (e.g., the personnel can see the descriptive content and attached image(s), view additional documentation if provided, etc.). If the task is a decision point, the personnel can answer a question (i.e. pick the path to follow next) and mark the task complete.

The personnel are then automatically taken (e.g., by the system or method changing the display of the prescription) to the appropriate next task in the subtask flow. Once the end of a subtask flow is reached (e.g., the node marking the end of the subtask flow is reached), the system and method can automatically collapse the higher-level task, hide the subtask flow, and return to displaying the top-level task to the user. The user can then answer a question of the prescription (e.g., was the task completed?, what was the sensor reading or measurement?, etc.), complete the high-level task, and move on to the appropriate next task in the flowchart or decision tree of the prescription. The collapsed higher-level task can be shown as a node in the flowchart or decision tree, with a summary of the contents of the higher-level task shown in the node.

Expert users can then chose to view and work the high-level task (with less instructional detail given), while novice users can choose to work at the subtask level where more detailed instructions can be given, and more supporting documentation can be made available. End-users can choose for themselves whether to see more details or not. This helps to keep details out of sight and out of the way of expert users, but keeps the details available should a user decide to obtain more information to perform the task at hand. Both expert and novice users follow the same basic flowchart or decision tree flow through the prescription. Users can choose to perform a few more subtask steps but, in the end, the same tasks are performed.

The system may know the user with which the system is interacting based on the user input or selection, based on a user identification, based on a user tag or identification device, or the system may decide automatically. In one embodiment, the inventive system automatically decides the user skill or experience level. This may be done, for example, by checking a table or equivalent database having information about the user or by checking a history of the user activities with the system. If, for example, the user has performed the prescription before then the system may assign a respective skill level to the user. If the user has performed the prescription at hand many times before the system may determine that the user is a skilled and experienced user. In the event there is no history or user skill table available, the system may assume that the user has a basic skill set or is unskilled. Other factors may be considered for automatic assignment of skill levels (which may be overwritten by the user as disclosed herein). If the user has performed the prescription many times, but the equipment has upgraded to a new model or there has been an advisory warning attached to a part or component that is affected by the prescription, then the system may do one or more of flag the change, alert the user, revert to a basic skill set level. In an instance, the portion of the prescription that is affected by the flagged change is set to a more voluminous and expansive instruction set while the remainder of the prescription that is not unchanged remains in a condensed state (for the experienced user). The system further may factor in the success rate of the user with regard to completing the prescription, the time in which the user takes to complete the prescription, the user performance for related but different prescriptions, the user performance relative to the performances of other users for the same or similar repairs, or the performance of the equipment post-repair for prior prescriptive maintenance by the user.

With the user identified and the level of skill determined, another feature is that the system can reconfigure the prescription in a preferred language of the user. Not only can text be converted, but video and audio files can be selected that match the user profile. Handicapped accessories can be associated with a user preference so that, for example, larger print may be used. And, the device through which the user is accessing the system may influence the presentation so that a user with a tablet receives a different user interface from one on a smaller smart phone or smart glasses.

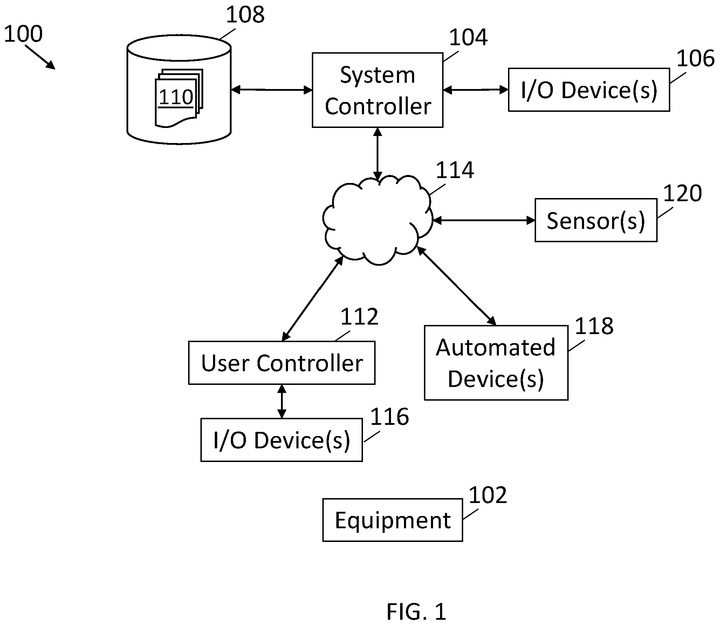

Figure 1 illustrates one embodiment of a customized instructional flowchart generation and modification system 100. The system can be used to create, modify, and present prescriptions for inspecting, repairing, maintaining, or the like, of equipment 102. The equipment can represent one or more powered systems, such as a vehicle, an engine, a battery system, an electric circuit, a turbine, a motor, or the like, or one or more non-powered systems, such as a resistive braking grid, a wheel, or the like. The system 100 includes a system controller 104 that represents hardware circuitry having and/or connected with one or more processors (e.g., field programmable gate arrays, integrated circuits, microprocessors, etc.) that perform the operations described herein in connection with the system controller. The system also includes one or more input and/or output devices 106 ("I/O Device(s)" in Figure 1) that receive input and/or provide output. The I/O devices can represent touchscreens, other electronic displays, keyboards, microphones, styluses, and the like. The I/O devices can be used to create and/or review the prescriptions described herein.

The system also includes one or more computer-readable storage devices or memories 108. The memory shown in Figure 1 can represent one or more databases, hard drives, servers, or the like, that can store different prescriptions 110 for different types (e.g., different makes and/or models) of the equipment. The memory can be a persistent data store in one embodiment. The system can store a single prescription for each different type of equipment, for each part of the equipment, etc., instead of having multiple different prescriptions for the same equipment or equipment part (with the different prescriptions containing different amounts of information for personnel performing the tasks in the prescriptions).

The system controller can communicate a prescription for inspection, repair, and/or maintenance of the equipment to a user controller 112 via one or more computer networks 114. The networks can represent all or part of the Internet, one or more local area networks, one or more wide area networks, and/or the like. The user controller can represent hardware circuitry having and/or connected with one or more processors (e.g., field programmable gate arrays, integrated circuits, microprocessors, etc.) that perform the operations described herein in connection with the user controller. One or more additional I/O devices 116 can be operably coupled with the user controller to allow personnel to provide input and/or receive output via the user I/O devices 116. For example, personnel can provide input to select a prescription, view details of the prescription (and optionally expand or contract the prescription for more or less information, as described herein), add notes to the prescription, or the like. The user controller can communicate with the system controller to obtain the prescription, expand or contract the prescription, or the like, based on the input received from the personnel. Optionally, one or more of the user I/O devices may be an output device.

The system may include one or more automated devices 118. The automated devices can represent apparatuses or systems that automatically perform some or all operations in a prescription on the equipment. For example, a suitable automated device can represent one or more robots or robotic systems that perform operations in the prescription.

The system optionally can include one or more sensors 120 that can measure characteristics of the equipment. The sensors can measure temperatures, measure electric currents, take photos or videos, etc., of the equipment before, during, and/or after performance of the prescription on the equipment. These measured characteristics can be used to make decisions within the flowchart or decision trees in the prescription, to verify that tasks have been correctly completed, and the like. The sensors can communicate the measured characteristics to the user controller and the user controller can use the measured characteristics that are received to determine whether a prescription task is or has been completed. The system can note the time for each step of the repair or maintenance process, and can compare the efficiencies of one user relative to other users performing the same work, or to a baseline established by that user's past efforts. This comparison can be used during performance of tasks within the same prescription or during performance of tasks in a subsequent prescription performed by the same user to automatically show or hide certain tasks. For example, as the user takes less time to complete certain tasks, the user becomes more efficient at those tasks. As the user's efficiency in completing tasks increases, fewer details of those tasks may be shown to the user in the same or subsequent prescription (or some tasks may be hidden from view).

The user controller can control the user I/O device 116 to display contents of prescriptions, such as images, graphics, videos, text, as well as user interface controls (menus, buttons, scrollbars, checkboxes, text entry fields, etc.). The user I/O device can include a pointing device (e.g., a stylus, electronic mouse, touchscreen, etc.) that allows the user to select entities shown on the user I/O device, and to select and drag entities to reposition the entities on the display of the user I/O device. The user I/O device can display single or multiple prescriptions as one or more flowcharts or decision trees. The flowcharts or decision trees can include summaries of information for each task in the prescription. These summaries can represented by nodes in the flowchart or decision tree, and may include information such as (but not limited to) the sequence number used as short-hand for identifying a task, the title of the prescription, a short description of the prescription, a question for the user to provide a response to, etc.

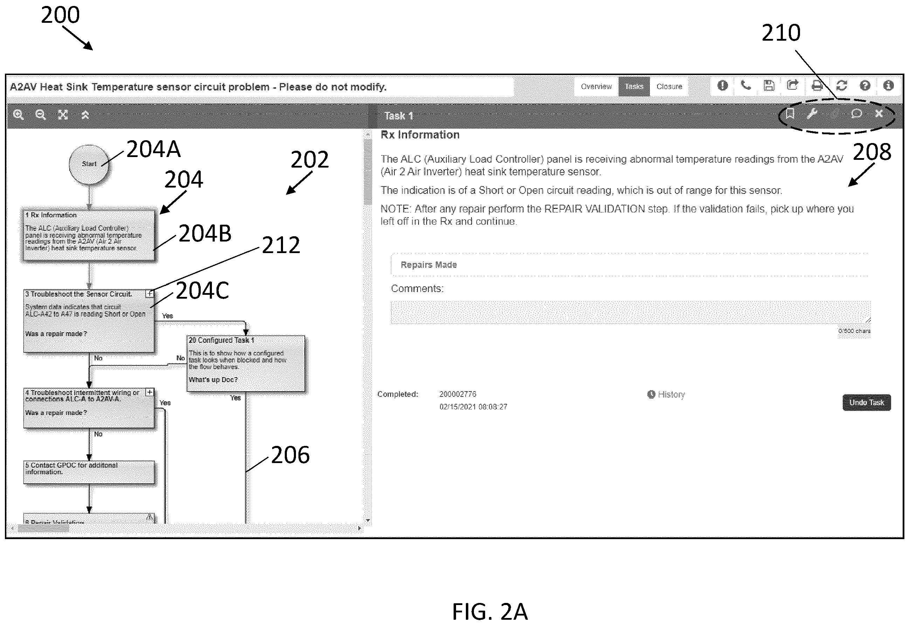

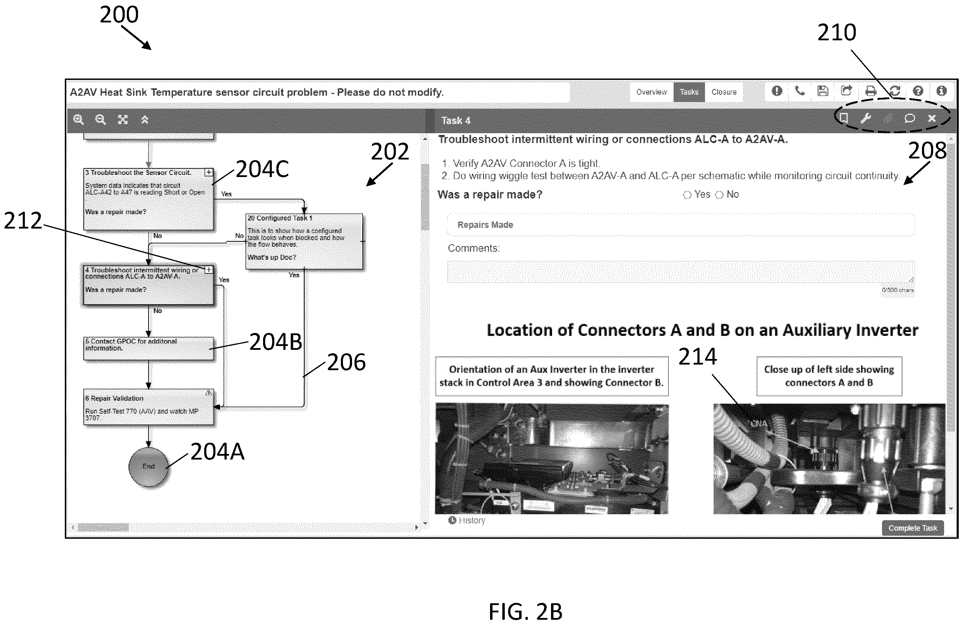

Figures 2A and 2B illustrate one example of a GUI 200 that can be presented on the user I/O device for viewing, expanding or contracting, editing, or annotating one or more of the prescriptions. The GUI 200 shown in Figure 2 illustrates part of a flowchart or decision tree 202 that represents the tasks to be performed in the prescription. The flowchart or decision tree includes nodes 204 (e.g., nodes 204A-C) coupled with each other by links 206. The positions and orientations of the nodes and links visually instructs the personnel performing the prescription of the order or sequence of the tasks to be performed. Some nodes 204A can indicate the start or end of the overall prescription or nested flowcharts within the larger flowchart. Other nodes 204B, 204C can include text, images, graphics, or the like, to direct what operations should be performed before progression of the prescription can move past or beyond the corresponding node. The prescription can display different nodes in different ways to indicate whether a task associated with the node (or a nested flowchart contained within node) was completed, has not yet been completed, was skipped, was unable to be completed, has been selected to reveal more details, or the like. For example, the nodes can be presented in different colors, with different boundaries, with different types of text, etc.

In the illustrated example of Figure 2A, the first node below or after the start node has been selected by personnel selecting the node using the user I/O device. The user controller detects this user selection of the node and can direct the display of the user I/O device to present additional details 208 of the task(s) in the prescription at that selected node. The additional details can include images, videos, text, drawings, or the like, to assist or guide the personnel through the steps needed to complete the associated task. In one embodiment, the additional details can include documents or links to documents that can be downloaded and viewed. Selecting another node in the prescription will cause the user controller to direct the user I/O device to display other details of another task. As the user progresses through the prescription, selecting different nodes will cause different details to be displayed.

The prescription can cause the user controller to direct the user I/O device to display navigation icons 210. These navigation icons can be selected to zoom in or out of the flowchart, to return to a starting location or prior node of the flowchart, to collapse portions of the flowchart containing subtasks of the prescription, to expand subtasks of the prescription, or the like. One or more of the nodes can include expansion icons 212 that can be selected to expand a nested flowchart contained within the corresponding node, as described herein.

The system controller and/or user controller can change the prescription or change how the prescription is displayed based on output from the sensors. For example, the system controller and/or the user controller can receive output from the sensor(s) and determine that the sensor output is abnormal or outside of designated bounds. If the sensor output is abnormal or outside of designated bounds, then the system controller and/or user controller can automatically expand a node to reveal one or more subtasks that are required to be completed, can change a task associated with a node from an optional task to a mandatory task (that must be completed before progress in the prescription can advance or that must be completed before the prescription is completed), etc.

The flowchart of the prescription can include one or more decision nodes 204C. At a decision node, progress or advancement of the prescription to a subsequent node depends on the outcome of the task performed at the decision node. For example, a decision node may ask for input from the user or the sensor(s). Based on the input, advancement of the flowchart may proceed to different nodes 204B.

Also as shown in Figure 2B, user selection of a node can reveal the additional information on the right side of the GUI. This additional information can include images and/or videos 214 to guide the personnel through the task(s) associated with the selected node. The user can employ the user I/O device to add notes to the prescription (as shown in the right side of Figure 2B). These notes can indicate any problems that were encountered, abnormalities noticed by the personnel, sensor output, test results, or the like.

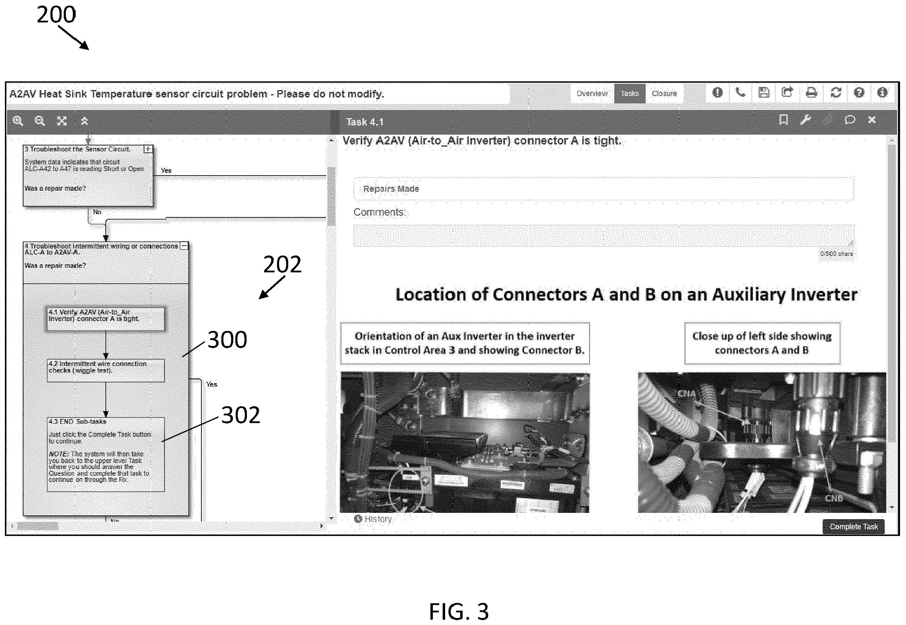

As described above, an expansion icon can be selected to expand a node into a larger single node, two or more nodes that do not include a decision node, and/or two or more nodes that include a decision node. Figure 3 illustrates another example of the prescription shown in Figures 2A and 2B with a node 300 being expanded. The node 300 can be referred to as a higher-level node. The user I/O device can be used to select the node ("4 Troubleshoot intermittent wiring ..." in Figure 2B). As shown in Figure 3, this selected node is expanded to include three nested nodes 302. These nested nodes can represent additional tasks, instructions, images, videos, etc. that are presented to the user on the user I/O device and that may require completion before advancing past the nested node. The nested nodes can be referred to as sub nodes and the tasks within the nested nodes can be referred to as subtasks. In the illustrated embodiment, the three nested nodes represent a subset of the tasks in the prescription.

The prescription can be created by the system controller with all of the nested tasks or nodes, text, images, videos, or the like. Prior to sending the prescription to the user controller, however, the system controller can change which nodes are expanded (to show the nested tasks or nodes), how much information (text, images, videos, etc.) is presented when one or more of the nodes is selected, or the like, based on one or more characteristics of the personnel that is performing the tasks in the prescription. For example, the user who will be performing the tasks in the prescription can provide identifying information, such as a login and password combination, an identification number or alphanumeric string, or the like, to the system controller via the user I/O device(s) and the user controller. The system controller can store (e.g., in the memory) different experience levels, education levels, and the like, with different identifications of users. Depending on the identifying information provided, the system controller can determine how experienced and/or educated the personnel is that is about to perform some or all of a prescription.

The system controller can then modify the prescription by collapsing some expandable nodes for personnel that are more experienced and/or educated, by expanding some expandable nodes for other personnel that are less experienced and/or educated, by expanding the amount of text, images, videos, etc. that are presented when one or more nodes are selected for personnel that are less experienced and/or educated, by collapsing or reducing the amount of text, images, videos, etc. that are presented when one or more nodes are selected for personnel that are more experienced and/or educated, etc. The system controller can make these changes without eliminating data from the prescription, but instead by collapsing or otherwise obscuring from view the details that are not needed for some personnel or expanding or otherwise displaying the details that may be needed for other personnel.

The system controller can make these changes without modifying the content of the prescription. For example, the size of the electronic software data file or files that contain the prescription may remain the same regardless of which nodes are collapsed or expanded, what information is shown or not shown in the additional details, etc., when the prescription is provided to the user controller and displayed on the user I/O devices. This can eliminate the need for creating many different prescriptions having different amounts or levels of detail for personnel with different experience and/or education levels. Optionally, the user controller can change which nodes and/or additional details are expanded or contracted based on personnel experience and/or education.

As one example, different personnel may have completed the same prescription or node tasks several times before. The number of completions of a prescription and/or task may be stored and associated with identifiers of the personnel in the memory. Once personnel have completed the same prescription or node tasks at least a threshold number of times, the system controller and/or user controller can change how a prescription is displayed. Those personnel having completed the prescription or tasks more than the threshold number of times may have fewer nodes being displayed in the expanded mode and/or may have less information displayed in the additional information section of the GUI, while other personnel having not completed the prescription or tasks more than the threshold number of times may have more nodes displayed in the expanded mode and/or may have more information displayed in the additional information section of the GUI.

As another example, different persons may have different quantified ratings that are stored in a memory (described below). These ratings may be manually set or established, and/or may be based on or may change based on how many times the user has completed a prescription. The users completing the same prescription more times may be associated with higher ratings, while the users completing the same prescription fewer times may be associated with lower ratings (relative to the users with higher ratings). A controller (e.g., a system controller or user controller, described below) may display more details of the prescription based on the rating (with more instructions displayed for lower ratings and fewer instructions displayed for higher ratings), and optionally may require a sign-off or approval from some users based on the rating. For example, a user having a rating below a threshold rating may not be able to move beyond or past one or more tasks or decisions within a prescription unless or until another user having a higher rating (e.g., greater than the threshold rating) reviews and approves the work completed by the lower-rated user. Users having ratings greater than the threshold rating may not have this required sign-off or approval; instead these users may be able to proceed through the prescription without pausing or waiting for sign-off or approval.

The display of the prescription can be changed based on characteristics of the equipment on which the tasks in the prescription are performed. The user controller can communicate an identification of the equipment (e.g., serial number or other unique number, make and model identification, etc.) to the system controller. The system controller (or user controller) can refer to the memory, which can store the level or amount of information to be displayed based on the equipment identification.

The system controller or user controller may tailor content of the prescription based on, for example, characteristic(s) of the equipment. That is, the system controller or user controller can hide (e.g., from display) tasks that are not applicable to the equipment (e.g., tasks that cannot be performed on the equipment, tasks that should not be performed on the equipment, etc.). The system controller or user controller can determine which tasks of the prescription to hide from display based on an identification of the owner of the equipment, an identification of a fleet of equipment in which the equipment is included, a type of the equipment (e.g., an engine versus an alternator; a hybrid vehicle versus a liquid fuel vehicle; etc.), a model of the equipment (e.g., a model number), a configuration of the equipment (e.g., whether the equipment is set up to operate as a traction motor for propelling a vehicle or a motor that performs work other than propulsion, etc.).

The identification or information provided to the controller about the equipment optionally can indicate what tasks or prescriptions have previously been performed on the equipment. For example, if the equipment was recently tested, examined, or maintained, then one or more operations performed during the recent testing, examination, or maintenance may not need to be performed again or fewer details may need to be provided to the personnel. The system controller or user controller can then collapse the amount of information that is presented in the prescription (e.g., by collapsing nodes, displaying less information in the additional details section, etc.). As another example, if it has been a significantly long period of time since the equipment was tested, examined, or maintained, then more information may need to be presented to the personnel to ensure that no steps are missed. The system controller or user controller can then expand the amount of information that is presented in the prescription (e.g., by expanding nodes, displaying more information in the additional details section, etc.).

As another example, the identification can indicate what tasks or prescriptions have previously been performed on another piece of equipment that is the same make and/or model of equipment. For example, if the same users have performed the same tasks or prescriptions on the same make or model of this equipment, then fewer details of the nodes and tasks may need to be displayed to the users. But if the same users have not performed the same tasks or prescriptions on the same make or model of equipment, then more details of the nodes and tasks may need to be displayed to the users.

The system controller or user controller can skip the nodes that do not apply to the equipment being worked on using the prescription. For example, the same prescription may be used to inspect the same equipment that is used in different powered systems (e.g., different vehicles). Some tasks may not be required to be performed or may be inapplicable for some uses of the equipment. Based on the characteristics of the equipment, the system controller and/or user controller can determine which tasks, if any, do not need to be performed. The nodes representing these tasks can be presented differently (e.g., grayed out), can be hidden from view, or otherwise indicated as not required for completion of the prescription.

The display of the prescription can be changed based on an identification of a user, an identification of the equipment, an identification of an entity (e.g., company, corporation, government agency, etc.), or the like. The user controller can communicate the identification to the system controller. The system controller can refer to the memory, where preferences associated with the provided identification may be stored. For example, some customers may prefer metric units be used in the prescription instead of English units, some users may prefer greater or lesser detail be shown, or the like. The system controller can change how the prescription is displayed or direct the user controller to change how the prescription is displayed based on the preferences associated with the identification, as described herein.

The display of the prescription can optionally be changed based on a location of the equipment. The user controller can communicate the location of the equipment with the system controller or the equipment location may be known to the system controller, such as from output from the sensors (e.g., a global navigation satellite system receiver). The system controller and/or user controller can change how the prescription is displayed based on the location of the equipment. For example, the units of measure that are displayed may be changed from English to metric (or vice-versa) based on which country the equipment is located in. Alternatively, the unit of measure that is less frequently used in the country may be obscured from view while the unit of measure that is used more frequently is displayed.

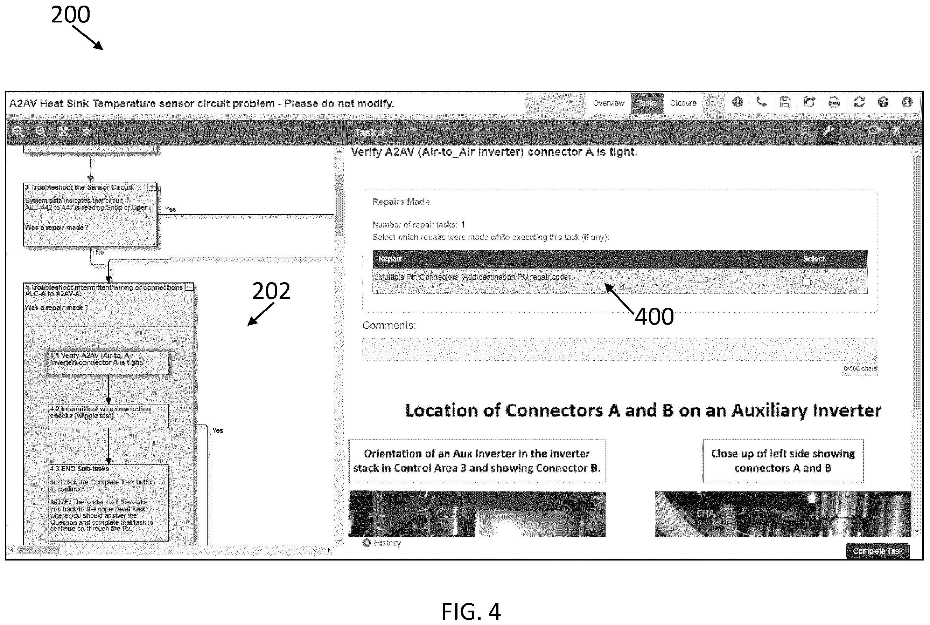

Figure 4 illustrates another example of the portion of the GUI 200 shown in Figure 3. Input 400 can be provided to the user controller from the user I/O device or the automated devices. This input can indicate that the tasks(s) are completed, which repairs were made, etc. The input can be provided in the additional details section of the GUI by the user employing the user I/O device, by the user controller receiving output from the sensor(s), and/or by the user controller receiving output from the automated devices. The input can be saved with the prescription in the memory or can be saved separate from the prescription but associated with the prescription (e.g., in the memory, such as by using file pointers, library calls, or other data file associations). The user controller can then advance progress of the prescription to the next node along the flowchart, such as by automatically changing the color of the next node and displaying details of that node in the additional details area of the GUI.

For example, the user controller and/or system controller optionally can change how different nodes, links, and the like, in the prescription are displayed responsive to tasks being completed, decisions at decision nodes being made, personnel adding notes or information to the prescription, etc. This can assist in communication between different personnel working on the prescription at the same or different times, and can reduce or eliminate confusion over what tasks have been completed, what decisions were made within the prescription, where other personnel stopped working or left off in the prescription, etc.

The controller(s) can display the current completion state of a prescription by visually distinguishing a task node for a completed task from other task nodes that have not been completed. This can be accomplished by, as one example, changing the color of the task node, changing a border thickness, etc., relative to the color used for nodes where the task has not been marked complete. As another example, the controller(s) can visually distinguish the path taken as a technician or craftsperson answers questions and proceeds from task to task within the flowchart or decision tree of the prescription. For example, the links connecting the nodes that are completed can be displayed in a different way (different color, different thickness, static versus dynamically changing or flashing, etc.). As another example, the controller(s) can visually mark the current task being viewed or worked, such as by highlighting, changing the color in which the corresponding task node is displayed, changing a thickness of the border of the node, etc., relative to other nodes.

Upon completing a task or subtask, the user controller can automatically change display of the flowchart or decision tree of the prescription. For example, display of the flowchart or decision tree can automatically pan and/or zoom to the next node (e.g., task) along the link or links from the prior node. This can avoid creating confusion where personnel could otherwise get lost within the flowchart or decision tree by having to return to changing display of the flowchart or decision tree each time a task or node is completed.

Providing the input to the prescription can assist in completion of the prescription when the prescription is performed by several different personnel and/or is performed over an extended period of time (e.g., several work shifts, several days, etc.). The user controller can change the color or other appearance of a node to indicate that the node is completed (e.g., by displaying the node in green), that the tasks within the node have begun to be completed but are not yet complete (e.g., by displaying the node in yellow), that the task was skipped (e.g., by displaying the node in blue), or that the task has yet to be started (e.g., by displaying the node in gray). This can assist personnel in determining which nodes and tasks within the nodes still need to be completed. Upon resuming work on a prescription after a stoppage, the user controller can automatically pan and/or zoom display of the flowchart or decision tree to the last node that was completed, the last node that was being worked on but not yet completed, or to the next node following the last completed node. This can reduce delay in the personnel finding where to resume work on the prescription.

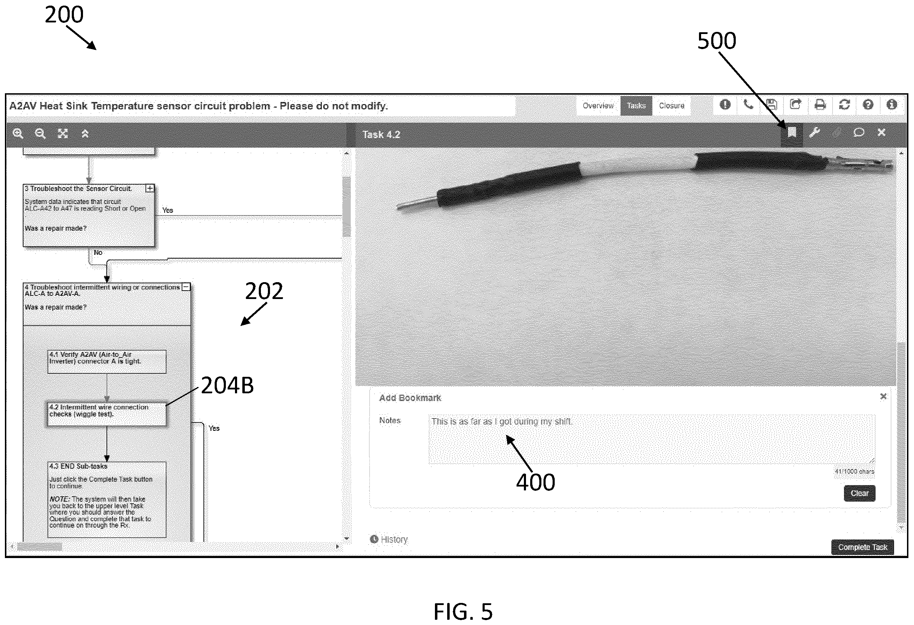

Figure 5 illustrates another example of a portion of the GUI 200 shown in Figures 2A and 2B. As shown in Figure 5, the user I/O device can be used to select a bookmark icon 500 and/or to add other input 400 to the prescription. The bookmark icon can be selected and saved with the prescription (or in a data file associated with but not included in the prescription) to indicate where the personnel stopped working on the prescription. For example, the node 204B having one or more tasks that the personnel started working on, but did not complete, and that is associated with the bookmark, can be displayed in a different color, with a different sized border, with different font text, with different sized text, or the like, relative to other nodes to indicate which node 204B was last being worked on (as shown in Figure 5).

The personnel can use the sensor(s) to add the other input, such as a photograph, video, drawing, typed text, etc., to notify other personnel or to remind the same personnel where progress on the prescription was stopped (e.g., at the end of a shift or when a problem was encountered). The next personnel to re-start work on the prescription can then easily find which node was being worked on when work on the prescription was stopped and optionally may be able to read and otherwise obtain additional information from the personnel formerly working on the prescription.

The input provided by personnel to the prescription can be a variety of different types of inputs. For example, the personnel can add one or more photos or videos as input using the sensors (e.g., a camera), a sound recording (of the equipment operating or the personnel speaking) as input using the sensors (e.g., a microphone), sensor outputs as input to the prescription, documents (the documents themselves or links to the documents) as input, etc.

The user controller can accept input from a user performing at least part of a prescription that marks or otherwise highlights a task or node in the prescription. This can assist in drawing attention to the task or node to the same personnel or other personnel. The user controller can change how a node is displayed responsive to that note being selected for marking or highlighting by a user. Different users may be associated with different colors or other ways to change how a node is displayed. The user controller can change display of the marked node to bring attention to the node. The user controller optionally can receive additional input from a user that marks a node or task. This input can be notes of observations made by the user, warnings from the user, other items to investigate or examine, or the like, to remind the same user or inform other users that also are working on the prescription. This may assist in preventing a loss of information when the prescription is handed off between different personnel working on the prescription at different times. The user controller can receive input from the same or different user(s) to stop highlighting or marking the node, which also can remove the notes or other input provided by the user(s).

The system controller can record which personnel completed the different tasks, when different tasks were completed, the sensor readings associated with different tasks, etc. This completion information can be saved and later viewed to audit or otherwise check on completion of the prescription, to determine which personnel to contact about certain tasks, etc. For example, the user controller and/or system controller can save, to a permanent or persistent data store, data indicative of a current state of the prescription and the tasks in the prescription. This data can indicate which tasks have been completed, the answers provided or obtained (e.g., from sensors) for a decision node, which links extending out from a decision node were taken in the progression of completing the prescription, which task was being worked on when the most recent personnel stopped working on the prescription, etc. This data can be sent by the system controller and/or retrieved by the user controller to change display of the prescription and indicate what tasks have been completed, the path taken through the prescription, the answers, etc. This can assist the same or different personnel in quickly and easily recognizing where to resume work on the prescription.

While one or more examples describe different persons working on different parts of the same prescription at different times, optionally, two or more different persons can concurrently or simultaneously work on the same prescription. For example, one part of the prescription can be performed by a first person working on a first portion of the equipment (e.g., the engine of a vehicle), while another, different part of the prescription can be performed by a second person working on a second portion of the equipment (e.g., a cooling system of the same vehicle), and so on. The user controller and/or system controller can record the progress and inputs of the different persons so that all persons working on the same prescription at the same time or at different times are aware of the tasks completed and results from those tasks completed by others.

In one embodiment, the automated devices can perform one or more of the tasks in a node automatically and without operator intervention. For example, after personnel has initiated performance of the prescription, the automated devices can automatically perform one or more of the tasks without the personnel having to manually control the devices to perform the tasks. This can allow for some or all of the nodes in the prescription to be automatically completed.

The system controller and the system I/O devices optionally can be used by one or more persons to draft or create the prescription. The drafting person(s) can use the I/O devices to associate images and/or documents with tasks, to upload external documents to be added as attachments to one or more of the tasks, and/or to select one or more tasks and create a higher-level task that encompasses the selected tasks as a subtask flow or subset of tasks. The system I/O devices also can be used to select tasks and draw links between the tasks to indicate flow and/or results of decisions within the prescription. The system I/O devices can allow for a person to select and drag one or more tasks (represented by one or more nodes) onto or into another node, thereby creating a subtask flow or subset of the tasks. The system I/O devices can be used to add text, images, video, or other information to a node for later viewing by the personnel.

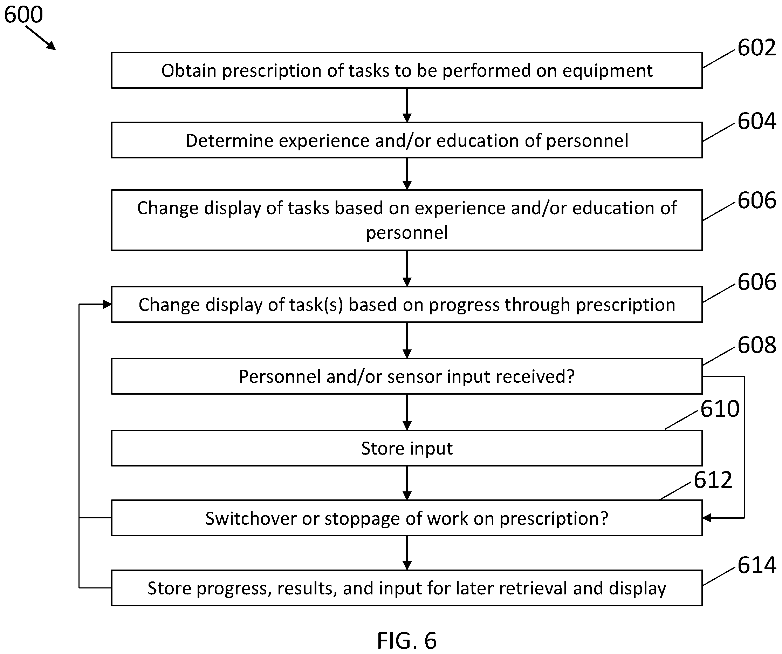

Figure 6 illustrates a flowchart of one embodiment of a method 600 for creating, presenting, and/or using a prescription to perform operations on equipment. The method can represent operations performed by one or more of the controllers described herein. At step 602, a prescription containing tasks to be performed on equipment is obtained. This prescription can be obtained over or via one or more networks from a computer memory. The prescription can be a single prescription for repairing, inspecting, or maintaining equipment that includes the information needed for both novice and expert users in performing the tasks on the equipment. At step 604, the levels of experience and/or education of the person(s) performing the tasks in the prescription are determined. The experience and/or education can be determined from identifying information of the person(s) or based on other input provided by the person(s).

At step 606, the display of tasks in the prescription is changed or controlled based on the levels of experience and/or education. As described above, two or more nodes or tasks can be collapsed into fewer or a single node or tasks for persons having increased levels of experience and/or education, while fewer or no nodes or tasks may be collapsed into fewer or a single node for persons will lower levels of experience and/or education. The collapsed nodes can be expanded by user input to ensure that many different levels of experience and education can obtain more information on completing the prescription if needed. In this way, a single prescription can be generated for the equipment, but display of the prescription can be modified so that more experienced and/or educated users are not bothered with details of tasks that the users are knowledgeable and experienced in completing, while less experienced and/or educated users are provided with more details of tasks.

At step 608, display of the tasks in the prescription is changed based on progress through the prescription. As described above, the color, border, text, or other appearance of nodes representing tasks can be changed as the tasks are completed. This can help to easily and quickly inform users of which node or task is being performed, which nodes or tasks have been completed, and which nodes or tasks need to be completed. At step 610, a determination is made as to whether input from personnel or sensors is received. The users performing the tasks in the prescription can provide input, such as notes on observations, problems that were encountered, extra steps or actions that were performed, etc. Data output by sensors can be provided before, during, and/or after performance of one or more tasks to check on the efficacy of the task(s), the success of the task(s), or other impacts of the task(s). If user input and/or sensor output is obtained, then flow of the method can proceed toward step 610, where the input and/or sensor output can be stored or saved with the node or task associated with the input and/or sensor output for later retrieval and review. If user input and/or sensor output is not obtained, then flow of the method can proceed toward step 612.

At step 612, a determination is made as to whether there is a switchover or stoppage of the work being performed on or with the prescription. For example, a user may be unable to complete all of the tasks within a prescription. The user may stop work on the prescription (e.g., a stoppage) and/or may hand over work on the prescription to another use (e.g., a switchover). If a stoppage or switchover occurs, then flow of the method can proceed toward step 614. Otherwise, work on the prescription may continue and flow of the method can return to another operation, such as step 606. Alternatively, flow of the method may terminate upon completion of the prescription.

At step 614, progress of the user through the prescription can be stored. For example, data indicative of completed tasks or nodes, decisions made at decision nodes, user input, sensor output, and the like, can be stored in the memory. At a later time when work resumes on the prescription by the same or another user, this data can be retrieved. Display of the prescription can be modified to visually indicate where the prior user stopped work. The user resuming work on the prescription can see where to begin work, as well as review any notes of the prior user, sensor output, and the like, to assist with further progress toward completion of the prescription. Flow of the method may return to another operation (e.g., step 606) or may terminate upon completion of the prescription.

In one embodiment, a method (e.g., for tailoring or customizing a single prescription for presentation to different users for completing tasks on equipment) is provided. The method includes obtaining the prescription that is representative of a flowchart or decision tree for performing a main set of the tasks on the equipment. One or more of the tasks including a subset of subtasks. The method also includes determining a personnel characteristic of person(s) that will perform the tasks on the equipment, an equipment identification, an equipment configuration, a first history of usage and/or prior tasks performed on the equipment, a second history of usage and/or prior tasks performed on other equipment that is the same model as the equipment, and/or sensor data of the equipment. The method also includes configuring the prescription based on the personnel characteristic, the equipment identification, the equipment configuration, the first history, the second history, and/or the sensor data. The set of instructions is configured by revealing at least a first subset of the subtasks and/or concealing at least a second subset of the subtasks. The method also includes communicating the prescription that has been configured to the one or more persons for performing the tasks in the prescription on the equipment.

Optionally, configuring the prescription can include concealing at least the second subset of the subtasks by collapsing display of at least the second subset of the subtasks into a single node within the flowchart or the decision tree responsive to determining that the one or more persons performing the tasks in the prescription has at least a threshold level of one or more of experience or education. Configuring the prescription can include revealing the at least the first subset of the subtasks by expanding the at least the first subset of the subtasks into multiple nested nodes within a single node in the flowchart or the decision tree responsive to determining that the one or more persons performing the tasks in the prescription does not have at least a threshold level of one or more of experience or education. Configuring the prescription can include changing a display of the prescription without eliminating or adding data to the prescription.

The method optionally can also include receiving input from the person(s) during performance of the tasks in the prescription to (a) expand the subset of the subtasks that is collapsed in a display of the flowchart or decision tree and/or (b) collapse the subset of the subtasks that is expanded in the display of the flowchart or decision tree. At least one of the tasks can include a decision, and the method also can include changing display of the flowchart or decision tree to move to a subsequent task of the tasks following the decision based on an outcome of the decision.

The method also can include changing a presentation of one or more of nodes or links in the main set of the tasks in the flowchart or decision tree responsive to completion of at least one of the tasks, initiating but not completing work on the at least one of the tasks, data input by the one or more persons during work on the at least one of the tasks, and/or a bookmark being added by the one or more persons responsive to stoppage of work on the prescription. Configuring the presentation can include changing a unit of measure used in the tasks based on one or more of an identity of the user or a location of the equipment.

The method also can include saving data indicative of (a) completion of one or more of the tasks, (b) input provided by the one or more persons, and/or (c) a decision made within the flowchart or the decision tree responsive to or in connection with a stoppage of work on the prescription, retrieving the data that is saved responsive to resuming work on the prescription, and displaying the flowchart or the decision tree based on the data that is retrieved.

A system (e.g., for tailoring or customizing a single prescription for presentation to different users for completing tasks on equipment) also is provided. The system includes a controller (e.g., a user controller and/or a system controller) that is configured to obtain a prescription representative of a flowchart or decision tree for performing a main set of tasks on equipment. One or more of the tasks includes a subset of subtasks. The controller is configured to determine one or more of a location of the equipment, a personnel characteristic of one or more persons that will perform the tasks on the equipment, an equipment identification, an equipment configuration, a first history of usage and/or prior tasks performed on the equipment, a second history of usage and/or prior tasks performed on other equipment that is the same model as the equipment, and/or sensor data of the equipment. The controller also is configured to direct an input and output device to display the prescription based on the one or more of the location, the personnel characteristic, the equipment identification, the equipment configuration, the first history, the second history, and/or the sensor data. The set of instructions is configured by one or more of revealing at least a first subset of the subtasks, and/or concealing at least a second subset of the subtasks.

Optionally, the controller can be configured to direct the input and output device to display the prescription by concealing at least the second subset of the subtasks by collapsing display of at least the second subset of the subtasks into a single node within the flowchart or the decision tree responsive to determining that the one or more persons performing the tasks in the prescription has at least a threshold level of one or more of experience or education. The controller can be configured to direct the input and output device to display the prescription by revealing the at least the first subset of the subtasks by expanding the at least the first subset of the subtasks into multiple nested nodes within a single node in the flowchart or the decision tree responsive to determining that the one or more persons performing the tasks in the prescription does not have at least a threshold level of one or more of experience or education.

The controller can be configured to direct the input and output device to change display of the prescription without eliminating or adding data to the prescription. The controller can be configured to receive input from the one or more persons during performance of the tasks in the prescription to one or more of (a) expand the subset of the subtasks that is collapsed in a display of the flowchart or decision tree or (b) collapse the subset of the subtasks that is expanded in the display of the flowchart or decision tree.

At least one of the tasks can include a decision, and the controller can be configured to change display of the flowchart or decision tree to move to a subsequent task of the tasks following the decision based on an outcome of the decision. The controller can be configured to change a presentation of nodes in the main set of the tasks in the flowchart or decision tree responsive to one or more of: completion of at least one of the tasks, initiating but not completing work on the at least one of the tasks, data input by the one or more persons during work on the at least one of the tasks, or a bookmark added by the one or more persons responsive to stoppage of work on the prescription.

The controller can be configured to change a presentation of links between nodes in the main set of the tasks in the flowchart or decision tree responsive to completion of at least one of the tasks. The controller can save data indicative of one or more of (a) completion of one or more of the tasks, (b) input provided by the one or more persons, or (c) a decision made within the flowchart or the decision tree responsive to or in connection with a stoppage of work on the prescription, the controller configured to retrieve the data that is saved responsive to resuming work on the prescription, and to direct the input and output device to display the flowchart or the decision tree based on the data that is retrieved.

Another method (e.g., for tailoring or customizing a single prescription for presentation to different users for completing tasks on equipment) also is provided. This method includes obtaining a prescription representative of a flowchart or decision tree for performing a main set of tasks on equipment, determining one or more characteristics of the equipment or a user of the prescription, and tailoring (e.g., customizing) content of the prescription that is displayed to the user during performance of at least some of the tasks on the equipment based on the one or more characteristics of the equipment. The content of the prescription is tailored by hiding one or more of the tasks that are not applicable to the equipment from display to the user. This can occur without any data or information being removed from or adding to the prescription. Stated differently the content of the prescription can be tailored without changing the information included in the prescription. Instead, the prescription can be tailored by changing what information is automatically and/or initially displayed to the user. The method also includes communicating the prescription that has been tailored to the user for performing the tasks in the prescription on the equipment. Optionally, the prescription can be tailored by hiding at least some of the tasks based on one or more of an owner of the equipment, a fleet of equipment in which the equipment is included, a type of the equipment, a model of the equipment, or a configuration of the equipment.

As used herein, the terms "processor" and "computer," and related terms, e.g., "processing device," "computing device," and "controller" may be not limited to just those integrated circuits referred to in the art as a computer, but refer to a microcontroller, a microcomputer, a programmable logic controller (PLC), field programmable gate array, and application specific integrated circuit, and other programmable circuits. Suitable memory may include, for example, a computer-readable medium. A computer-readable medium may be, for example, a random-access memory (RAM), a computer-readable non-volatile medium, such as a flash memory. The term "non-transitory computer-readable media" represents a tangible computer-based device implemented for short-term and long-term storage of information, such as, computer-readable instructions, data structures, program modules and sub-modules, or other data in any device. Therefore, the methods described herein may be encoded as executable instructions embodied in a tangible, non-transitory, computer-readable medium, including, without limitation, a storage device and/or a memory device. Such instructions, when executed by a processor, cause the processor to perform at least a portion of the methods described herein. As such, the term includes tangible, computer-readable media, including, without limitation, non-transitory computer storage devices, including without limitation, volatile and non-volatile media, and removable and non-removable media such as firmware, physical and virtual storage, CD-ROMS, DVDs, and other digital sources, such as a network or the Internet.

The singular forms "a", "an", and "the" include plural references unless the context clearly dictates otherwise. "Optional" or "optionally" means that the subsequently described event or circumstance may or may not occur, and that the description may include instances where the event occurs and instances where it does not. Approximating language, as used herein throughout the specification and claims, may be applied to modify any quantitative representation that could permissibly vary without resulting in a change in the basic function to which it may be related. Accordingly, a value modified by a term or terms, such as "about," "substantially," and "approximately," may be not to be limited to the precise value specified. In at least some instances, the approximating language may correspond to the precision of an instrument for measuring the value. Here and throughout the specification and claims, range limitations may be combined and/or interchanged, such ranges may be identified and include all the sub-ranges contained therein unless context or language indicates otherwise.

This written description uses examples to disclose the embodiments, including the best mode, and to enable a person of ordinary skill in the art to practice the embodiments, including making and using any devices or systems and performing any incorporated methods. The claims define the patentable scope of the disclosure, and include other examples that occur to those of ordinary skill in the art. Such other examples are intended to be within the scope of the claims if they have structural elements that do not differ from the literal language of the claims, or if they include equivalent structural elements with insubstantial differences from the literal language of the claims.

## Claims

1. A method comprising:
obtaining a prescription representative of a flowchart or decision tree for performing a main set of tasks on equipment, one or more of the tasks including a subset of subtasks;
determining one or more of a personnel characteristic of one or more persons that will perform the tasks on the equipment, an equipment identification, an equipment configuration, a first history of usage and/or prior tasks performed on the equipment, a second history of usage and/or prior tasks performed on other equipment that is the same model as the equipment, or sensor data of the equipment;
configuring the prescription based on the one or more of the personnel characteristic, the equipment identification, the equipment configuration, the first history, the second history, or the sensor data, the set of instructions configured by one or more of revealing at least a first subset of the subtasks, or concealing at least a second subset of the subtasks; and
communicating the prescription that has been configured to the one or more persons for performing the tasks in the prescription on the equipment.

2. The method of claim 1, wherein configuring the prescription includes concealing at least the second subset of the subtasks by collapsing display of the at least the second subset of the subtasks into a single node within the flowchart or the decision tree responsive to determining that the one or more persons performing the tasks in the prescription has at least a threshold level of one or more of experience or education.

3. The method of claim 1, wherein configuring the prescription includes revealing the at least the first subset of the subtasks by expanding the at least the first subset of the subtasks into multiple nested nodes within a single node in the flowchart or the decision tree responsive to determining that the one or more persons performing the tasks in the prescription does not have at least a threshold level of one or more of experience or education.

4. The method of claim 1, wherein configuring the prescription includes changing a display of the prescription without eliminating or adding data to the prescription.

5. The method of claim 1, further comprising:
receiving input from the one or more persons during performance of the tasks in the prescription to one or more of (a) expand the subset of the subtasks that is collapsed in a display of the flowchart or decision tree or (b) collapse the subset of the subtasks that is expanded in the display of the flowchart or decision tree.

6. The method of claim 1, wherein at least one of the tasks includes a decision, the method further comprising:
changing display of the flowchart or decision tree to move to a subsequent task of the tasks following the decision based on an outcome of the decision.

7. The method of claim 1, further comprising:
changing a presentation of one or more of nodes or links in the main set of the tasks in the flowchart or decision tree responsive to one or more of: completion of at least one of the tasks, initiating but not completing work on the at least one of the tasks, data input by the one or more persons during work on the at least one of the tasks, or a bookmark added by the one or more persons responsive to stoppage of work on the prescription.

8. The method of claim 1, wherein configuring the presentation includes changing a unit of measure used in the tasks based on one or more of an identity of the user or a location of the equipment.

9. The method of claim 1, further comprising:
saving data indicative of one or more of (a) completion of one or more of the tasks, (b) input provided by the one or more persons, or (c) a decision made within the flowchart or the decision tree responsive to or in connection with a stoppage of work on the prescription;
retrieving the data that is saved responsive to resuming work on the prescription; and
displaying the flowchart or the decision tree based on the data that is retrieved.

10. A system comprising:
a controller configured to obtain a prescription representative of a flowchart or decision tree for performing a main set of tasks on equipment, one or more of the tasks including a subset of subtasks, the controller configured to determine one or more of a location of the equipment, a personnel characteristic of one or more persons that will perform the tasks on the equipment, an equipment identification, an equipment configuration, a first history of usage and/or prior tasks performed on the equipment, a second history of usage and/or prior tasks performed on other equipment that is the same model as the equipment, or sensor data of the equipment, the controller configured to direct an input and output device to display the prescription based on the one or more of the location, the personnel characteristic, the equipment identification, the equipment configuration, the first history, the second history, or the sensor data, the set of instructions configured by one or more of revealing at least a first subset of the subtasks, or concealing at least a second subset of the subtasks.

11. The system of claim 10, wherein the controller is configured to direct the input and output device to display the prescription by concealing at least the second subset of the subtasks by collapsing display of at least the second subset of the subtasks into a single node within the flowchart or the decision tree responsive to determining that the one or more persons performing the tasks in the prescription has at least a threshold level of one or more of experience or education, or wherein the controller is configured to direct the input and output device to display the prescription by revealing the at least the first subset of the subtasks by expanding the at least the first subset of the subtasks into multiple nested nodes within a single node in the flowchart or the decision tree responsive to determining that the one or more persons performing the tasks in the prescription does not have at least a threshold level of one or more of experience, or wherein the controller is configured to direct the input and output device to change display of the prescription without eliminating or adding data to the prescription, or wherein the controller is configured to receive input from the one or more persons during performance of the tasks in the prescription to one or more of (a) expand the subset of the subtasks that is collapsed in a display of the flowchart or decision tree or (b) collapse the subset of the subtasks that is expanded in the display of the flowchart or decision tree, or wherein at least one of the tasks includes a decision, the controller configured to change display of the flowchart or decision tree to move to a subsequent task of the tasks following the decision based on an outcome of the decision, or wherein the controller is configured to change a presentation of nodes in the main set of the tasks in the flowchart or decision tree responsive to one or more of: completion of at least one of the tasks, initiating but not completing work on the at least one of the tasks, data input by the one or more persons during work on the at least one of the tasks, or a bookmark added by the one or more persons responsive to stoppage of work on the prescription.

12. The system of claim 10, wherein the controller is configured to change a presentation of links between nodes in the main set of the tasks in the flowchart or decision tree responsive to completion of at least one of the tasks.

13. The system of claim 10, wherein the controller is configured to save data indicative of one or more of (a) completion of one or more of the tasks, (b) input provided by the one or more persons, or (c) a decision made within the flowchart or the decision tree responsive to or in connection with a stoppage of work on the prescription, the controller configured to retrieve the data that is saved responsive to resuming work on the prescription, and to direct the input and output device to display the flowchart or the decision tree based on the data that is retrieved.

14. A method comprising:
obtaining a prescription representative of a flowchart or decision tree for performing a main set of tasks on equipment;
determining one or more characteristics of the equipment or a user of the prescription;
tailoring content of the prescription that is displayed to the user during performance of at least some of the tasks on the equipment based on the one or more characteristics, the content of the prescription tailored by hiding one or more of the tasks that are not applicable to the equipment from display to the user; and
communicating the prescription that has been tailored to the user for performing the tasks in the prescription on the equipment.

15. The method of claim 14, wherein the prescription is tailored by hiding at least some of the tasks based on one or more of an owner of the equipment, a fleet of equipment in which the equipment is included, a type of the equipment, a model of the equipment, or a configuration of the equipment.
